# EUROPEAN PATENT APPLICATION

(11) **EP 3 789 861 A1**
(43) Date of publication of application: **10.03.2021**
(21) Application number: 20193074.0
(22) Date of filing: 27.08.2020
(51) Int. Cl.: G06F 3/041, G06F 3/044

(54) **TOUCH PANEL-EQUIPPED DISPLAY DEVICE AND CONTROL METHOD OF TOUCH PANEL-EQUIPPED DISPLAY DEVICE**

(30) Priority: 29.08.2019 JP 2019157338
(71) Applicant: Alpine Electronics, Inc., Tokyo 145-8501 (JP)
(72) Inventor: Hiroki, Okada, Iwaki-city, Fukushima (JP)
(74) Representative: Schmitt-Nilson Schraud Waibel Wohlfrom Patentanwälte Partnerschaft mbB

(57) **Abstract**

To provide a "touch panel-equipped display device (1) and a control method of a touch panel-equipped display device (1)" which extend an execution period of a scanning operation of a touch panel (12) without degrading an image quality.

An LCD controller (13) that controls display of an input image on an LCD (11) provides a horizontal cycle (H3) to interrupt an update operation of a display line of the LCD (11) during vertical effective scanning periods (HI to H5) between vertical blanking periods (VI, V2) of an output image to the LCD (11) by making a horizontal cycle of the output image to LCD (11) shorter than a horizontal cycle of the input image while maintaining a frame cycle of the output image to LCD (11) equal to a frame cycle of the input image. In addition, the LCD controller (13) causes a touch panel controller (14) to execute a scanning operation of a touch panel (12) during the vertical blanking periods (VI, V2) of the output image to the LCD (11) and the horizontal cycle (H3) in which the update operation of the display line of the LCD (11) is interrupted.

## Description

The present invention relates to a display device equipped with a touch panel that detects a user's touch operation or hovering operation.

Among techniques relating to a display device equipped with a touch panel, there is known a technique in which a detection operation of a touch panel is performed only during a vertical blanking period of display (vertical blanking period) in order to prevent generation of display noise caused by the detection operation of the touch panel or erroneous touch detection due to noise caused by a display operation (for example, JP 2015-201075 A).

In addition, there is also known a technique in which only a vertical/horizontal rate is decreased without changing a display pixel rate (pixel clock) of a display device that displays a captured image to extend a horizontal blanking period and a detection operation of a touch panel is performed during the horizontal blanking period (for example, JP 2017-45326 A).

With an increase in a size of a display device or a touch panel, if two-dimensional space where coordinates need to be detected on the touch panel is also expanded, and a detection operation of the touch panel is performed only during a vertical blanking period and a horizontal blanking period, it is difficult to detect a touch operation or a hovering operation with sufficient responsiveness.

Meanwhile, according to the above-described technique of decreasing the vertical/horizontal rate, a display update rate of the display device decreases, so that a quality of a display image deteriorates.

Therefore, an object of the invention is to extend an execution period of a detection operation of a touch panel while eliminating influence of noise between the detection operation of the touch panel and a display operation of a display device and degradation of an image quality.

The invention relates to a touch panel-equipped display device and control method according to the appended claims. Embodiments are disclosed in the dependent claims. In an aspect, the invention relates to a touch panel-equipped display device that includes a touch panel and a display device, the device including: a display controller that updates an image displayed on the display device to an image represented by an input image; and a touch panel controller that controls a scanning operation which is an operation of scanning whether or not the touch panel is touched or approached by a detection object. However, the display controller causes the display device to sequentially update display of each line of a display image during each of display update horizontal periods in each of frame update cycles that are cycles each having the same time length as a frame cycle of an input image, and including a vertical blanking period in which one cycle has the same time length as a vertical blanking period of the input image, the display update horizontal periods which are provided as many as the number of lines of the input image and each of which has a shorter time length than a horizontal cycle of the input image, and a display update interruption period in which previous and subsequent periods are the display update horizontal periods, and causes the display device to interrupt the update of the display image during the display update interruption period. In addition, the touch panel controller causes the touch panel to perform a scanning operation at least during the vertical blanking period and the display update interruption period in each of the frame update cycles, and stops the scanning operation of the touch panel during a period in the display update horizontal period when the display device is caused to update the display of the line of the display image.

Here, such a touch panel-equipped display device may be configured such that the display update horizontal period includes a horizontal blanking period and a display update period, the display controller causes the display device to sequentially update display of the respective lines of the display image during each of the display update periods in each of the horizontal periods, and the touch panel controller causes the touch panel to perform a scanning operation during the vertical blanking period and the display update interruption period and the horizontal blanking period of each of the display update horizontal periods in each of the frame update cycles, and stops the scanning operation of the touch panel during the display update period in each of the display update horizontal periods.

In addition, in such a touch panel-equipped display device, the display controller may include: a FIFO-type buffer that stores pixel data of the input image; and a display update unit that reads and transfers the pixel data for one line from the buffer to the display device so as to update the display image on the display device by one line during each of the display update horizontal periods, and interrupts the read from the buffer and the transfer to the display device of the pixel data so as to stop the update of the display image of the display device during the display update interruption period.

In addition, in such a touch panel-equipped display device, the display update interruption period may appear a plurality of times during each of the frame update cycles.

In addition, in such a touch panel-equipped display device, a timing at which the display update interruption period appears during the frame update cycle may be changed for each of the frame update cycles.

In addition, in the above touch panel-equipped display device, a time length of the display update interruption period may be an integral multiple of the horizontal cycle of the input image.

According to the touch panel-equipped display device as described above, the display update interruption period in which the update of the display of the display device is not performed is inserted between the vertical blanking period and the vertical blanking period such that the previous and subsequent periods become the display update horizontal periods while maintaining the frame cycle of the input image, and the scanning operation of the touch panel is also performed during the display update interruption period in addition to the vertical blanking period. Thus, the execution period of the scanning operation of the touch panel can be extended while eliminating the influence of noise between the scanning operation of the touch panel and the display update operation of the display device and the degradation of the image quality caused by a decrease in a frame rate. In addition, a time interval between the respective scanning operations can be shortened to improve the responsiveness to a user's touch operation or hover scanning.

As described above, according to the invention, it is possible to extend the execution period of the detection operation of the touch panel while eliminating the influence of noise between the detection operation of the touch panel and the display operation of the display device and degradation of the image quality.
Fig. 1 is a block diagram illustrating a configuration of a touch panel-equipped display device according to an embodiment of the invention.
Fig. 2 is a view illustrating an operation timing of the touch panel-equipped display device according to an embodiment of the invention.
Figs. 3A and 3B are views illustrating a display operation of the touch panel-equipped display device according to an embodiment of the invention.
Fig. 4 is a view illustrating another operation timing of the touch panel-equipped display device according to an embodiment of the invention.
Fig. 5 is a view illustrating another operation timing of the touch panel-equipped display device according to an embodiment of the invention.

Hereinafter, embodiments of the invention will be described.

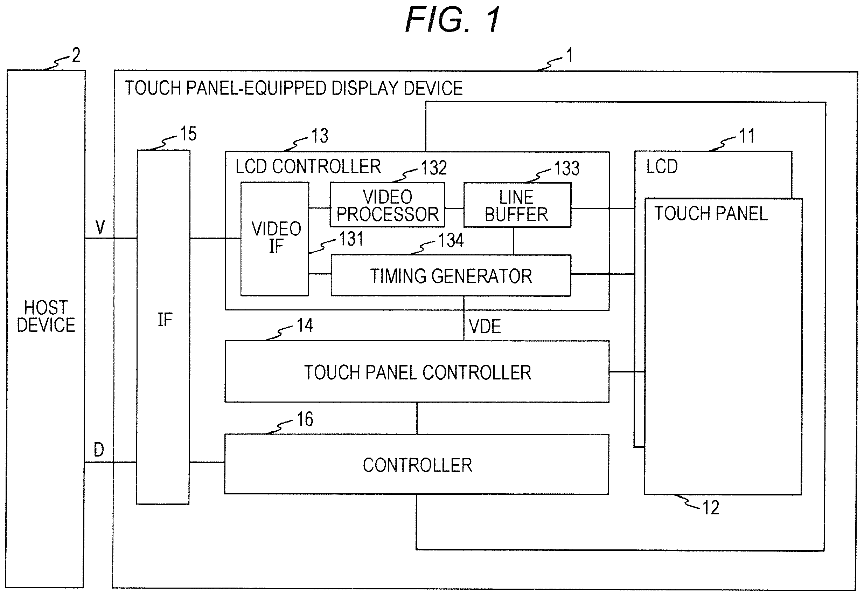

Fig. 1 illustrates a configuration of a touch panel-equipped display device 1 according to an embodiment.

As illustrated in the drawings, the touch panel-equipped display device 1 includes an LCD 11 (liquid crystal display 11), a capacitive touch panel 12, an LCD controller 13 that controls a display operation of the LCD 11, a touch panel controller 14 that controls a coordinate detection operation of the touch panel 12, an interface 15 (IF 15), and a controller 16 that controls the entire touch panel-equipped display device 1.

The interface 15 of the touch panel-equipped display device 1 is connected to a host device 2 which is a device that uses the touch panel-equipped display device 1 for display and coordinate input.

Further, the interface 15 sends image data V input from the host device 2 to the LCD controller 13.

The touch panel controller 14 causes the touch panel 12 to perform a scanning operation, detects coordinates on the touch panel 12 touched or approached by a user's finger, and sends the detected coordinates to the controller 16. Here, the scanning operation of the touch panel 12 is an operation in which an operation of detecting the distribution of capacitance changes on driven drive lines with detection lines arranged in the vertical direction with respect to the drive lines is performed for all the drive lines while sequentially driving the drive lines arranged in the horizontal direction or the vertical direction, and the touch panel controller 14 uses the two-dimensional distribution of the capacitance changes on the touch panel 12 obtained by the scanning operation to detect coordinates on the touch panel 12 touched or approached by the user's finger.

Further, the controller 16 transmits data D of the coordinates received from the touch panel controller 14 to the host device 2 via the interface 15.

The LCD controller 13 generates various synchronization signals from the image data V, and supplies pixel data included in the image data V to the LCD 11 in synchronization with each of the synchronization signals to cause the LCD 11 to perform the display operation.

More specifically, the LCD controller 13 includes a video IF 131, an image processor 132, a line buffer 133, and a timing generator 134.

The video IF 131 extracts a vertical synchronization timing, a horizontal synchronization timing, and a pixel timing from the image data V and sends the timings to the timing generator 134 and sends the pixel data included in the image data V to the image processor 132.

The image processor 132 subjects the input pixel data to image processing preset by the controller 16, such as brightness and color tone adjustment processing, and writes the pixel data in the line buffer 133.

The line buffer 133 is a FIFO-type buffer memory that can store pixel data for n lines (n > 1).

The timing generator 134 reads the pixel data from the line buffer 133, transfers the read pixel data to the LCD 11, and updates the display of the LCD 11.

In addition, the timing generator 134 also generates a scan control signal VDE and outputs the scan control signal to the touch panel controller 14.

Further, the touch panel controller 14 causes the touch panel 12 to perform the scanning operation only while the scan control signal VDE indicates a scan execution period.

Next, a relationship between a display update timing of the LCD 11 of the timing generator 134 and the scan control signal VDE output to the touch panel controller 14 is illustrated.

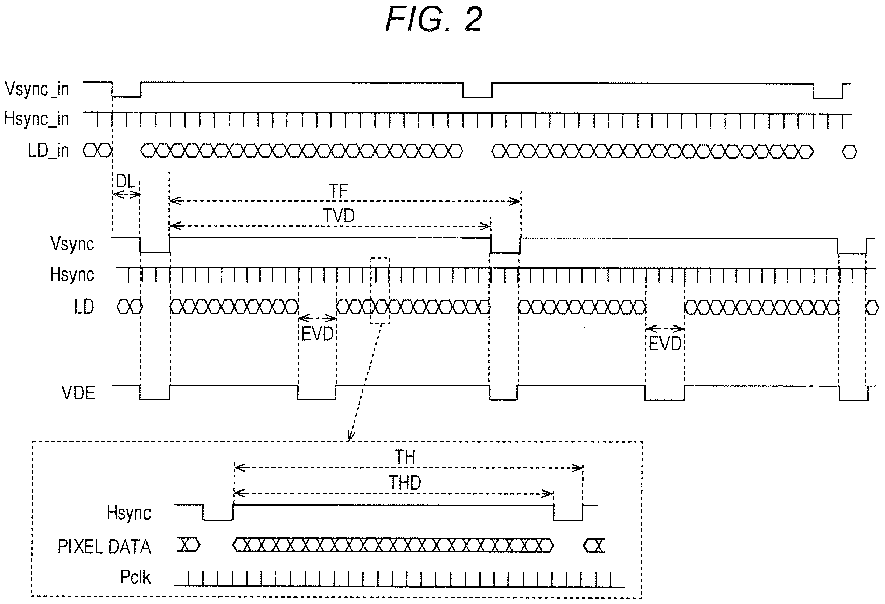

In Fig. 2, Vsync_in represents the vertical synchronization timing of the image data V input to the timing generator 134 from the video IF 131 represented in the form of a vertical synchronization signal, Hsync_in represents the horizontal synchronization timing of the image data V input to the timing generator 134 from the video IF 131 represented in the form of a horizontal synchronization signal, and LD_in represents pixel data for one horizontal line of the image data V input to the image processor 132 from the video IF 131. Note that the pixel timing input from the video IF 131 to the timing generator 134 is a timing synchronized with each pixel data in LD in.

In addition, Vsync represents the vertical synchronization signal generated by the timing generator 134, Hsync represents the horizontal synchronization signal generated by the timing generator 134, LD represents the pixel data for one horizontal line output from the timing generator 134 to the LCD 11, and PCLK represents a pixel clock generated by the timing generator 134.

The timing generator 134 generates a signal, obtained by delaying Vsync_in by a predetermined time length DL, as Vsync. In addition, a signal synchronized with Vsync in a cycle of TVD/(LN + 3) is generated as Hsync, where TVD is a vertical effective scanning period obtained by excluding a vertical blanking period from one frame period TF represented by Vsync, and LN is the number of lines in one frame. In addition, a pixel clock PCLK having a cycle of THD/PN is generated, where THD is a horizontal effective scanning period obtained by excluding a horizontal blanking period from a horizontal period TH represented by Hsync, and PN is the number of pixels in one line.

Here, the Hsync thus generated by the timing generator 134 has a cycle shorter than a horizontal cycle of the horizontal synchronization timing of the image data V represented by Hsync in, and the pixel clock PCLK generated by the timing generator 134 has a cycle shorter than a cycle of pixel data represented by the pixel timing of the image data V.

In addition, a horizontal period TH for three lines, which are not adjacent to the vertical blanking period, in the vertical effective scanning period TVD is set as a display stop line period EVD.

The timing generator 134 outputs necessary synchronization signals and control signals required for the display update of the LCD 11 to the LCD 11, and sequentially reads pixel data for one line from the line buffer 133 in synchronism with the pixel clock PCLK and transfers the read pixel data to the LCD 11 during the horizontal effective scanning period THD (effective scanning period) of each of the horizontal periods TH excluding the display stop line period EVD in the vertical effective scanning period TVD, thereby causing the LCD 11 to update a display image by one line. That is, pixel data of the i-th line of the image data V is read from the line buffer 133 and transferred to the LCD 11 during the i-th horizontal period TH excluding the display stop line period EVD in the vertical effective scanning period TVD, thereby causing the LCD 11 to update display of the i-th line of the display image.

However, the read from the line buffer 133 and the transfer to the LCD 11 of the pixel data are not necessarily performed in synchronization with the pixel clock PCLK, and may be performed at any speed as long as the read and transfer of the pixel data for one line can be performed within the horizontal effective scanning period THD.

In addition, when there is a delay between the transfer of pixel data for one line and the update of the display on the LCD 11 using the pixel data for the one line, a transfer timing of the pixel data for the one line is advanced by the delay.

In addition, the timing generator 134 stops reading pixel data from the line buffer 133 and a display update operation of the LCD 11 during the display stop line period EVD.

The display update operation of the LCD 11 is stopped, for example, by stopping the output of the synchronization signal and the control signal required for the display update of the LCD 11.

In addition, the timing generator 134 outputs the scan control signal VDE indicating the scan execution period to the touch panel controller 14 only during the vertical blanking period represented by Vsync and the display stop line period EVD. However, the timing generator 134 may set the scan control signal VDE to represent the scan execution period only during the vertical blanking period represented by Vsync, the horizontal blanking period represented by Hsync, and the display stop line period EVD. Note that the scan control signal VDE in Fig. 2 indicates the scan execution period when being low.

Here, the combination of the number of lines n capable of storing the pixel data in the line buffer 133, the predetermined time length DL, and a temporal position in the vertical effective scanning period TVD of the display stop line period EVD is set such that the line buffer 133 does not overflow due to the above operation of the timing generator 134, and the pixel data read from the line buffer 133 by the timing generator 134 is not lost.

In addition, in the example of Fig. 2, the length of the display stop line period EVD is set to the horizontal period for three lines, but this is an example, and the length of the display stop line period EVD may be a horizontal period for any number of lines.

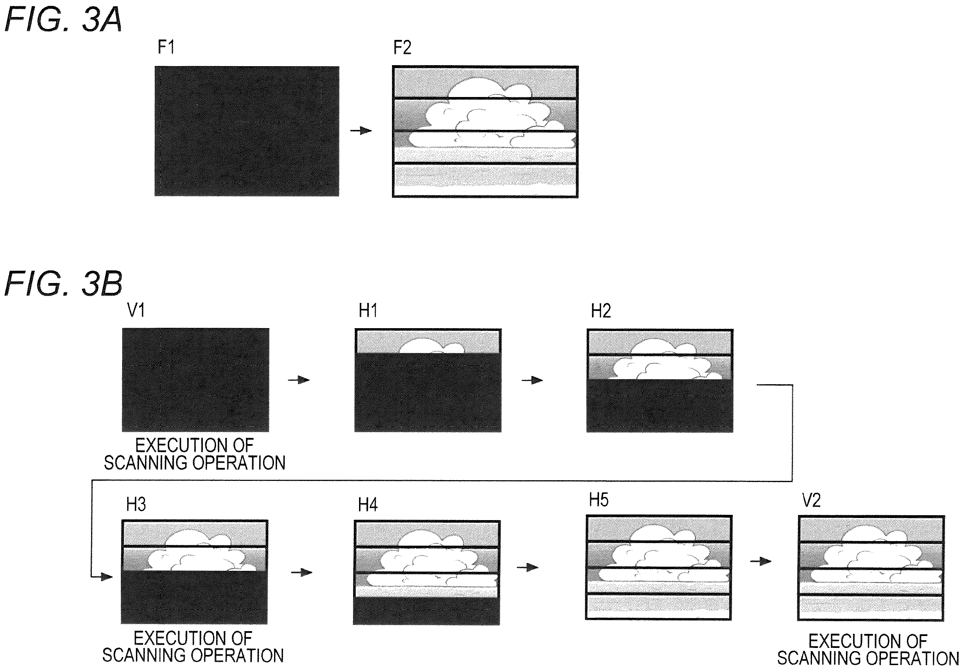

Figs. 3A and 3B schematically illustrate an exemplary operation of the touch panel-equipped display device caused by the above operation of the timing generator 134.

Note that, for convenience, the number of lines in each image frame is four, and the third horizontal period TH in the vertical effective scanning period TVD is the display stop line period EVD in Figs. 3A and 3B.

When updating the display of the LCD 11 from an image frame F1 to an image frame F2 illustrated in Fig. 3A, first, a vertical blanking period between the image frame F1 and the image frame F2 appears in a state where the image frame F1 is displayed as a display image, and the touch panel controller 14 causes the touch panel 12 to perform a scanning operation during this vertical blanking period.

Further, a first line of the display image is updated to a first line of the image frame F2 during a first horizontal period H1 in the horizontal effective scanning period, and a second line of the display image is updated to a second line of the image frame F2 during a second horizontal period H2.

Since a third horizontal period H3 in the horizontal effective scanning period is the display stop line period EVD, the display of the LCD 11 is not updated and is maintained, and the touch panel controller 14 causes the touch panel 12 to perform the scanning operation during the horizontal period H3.

Further, a third line of the display image is updated to a third line of the image frame F2 during a fourth horizontal period H4 in the horizontal effective scanning period, a fourth line of the display image is updated to a fourth line of the image frame F2 during a fifth horizontal period H5, whereby the display update on the image frame F2 is completed.

Further, next, a vertical blanking period between the image frame F2 and the next image frame appears in a state where the image frame F2 is displayed as a display image, the touch panel controller 14 causes the touch panel 12 to perform a scanning operation during this vertical blanking period.

According to the described embodiments, the display stop line period EVD during which the display update of the LCD 11 is not performed is inserted in the vertical effective scanning period TVD while maintaining a frame rate of the image data V input from the host device 2, and the scanning operation of the touch panel 12 is also performed during the display stop line period EVD in addition to the vertical blanking period. Thus, the execution period of the detection operation of the touch panel 12 is extended while eliminating the influence of noise between the scanning operation of the touch panel 12 and the display update operation of the LCD 11 and the degradation of the image quality caused by a decrease in the frame rate. In addition, the horizontal period TH that is not adjacent to the vertical blanking period is set as the display stop line period EVD, and thus, a time interval between the respective scanning operations is shortened as compared to a case where the scanning operation is performed only in the vertical blanking period, so that the responsiveness to the user's touch operation or hover scanning can be improved.

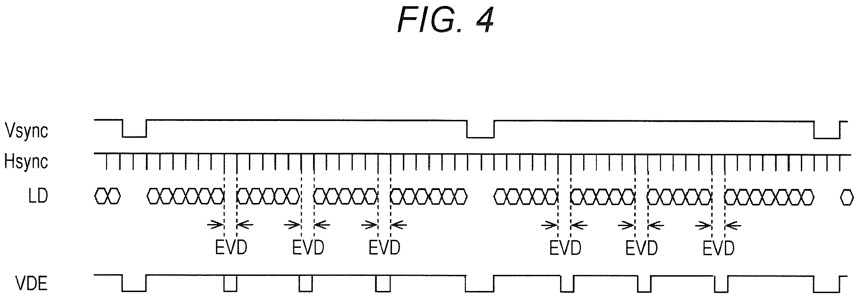

Meanwhile, the display stop line period EVD is provided so as to appear once during the vertical effective scanning period TVD in the above embodiment, but the display stop line period EVD may be provided so as to appear a plurality of times during the vertical effective scanning period TVD as illustrated in Fig. 4.

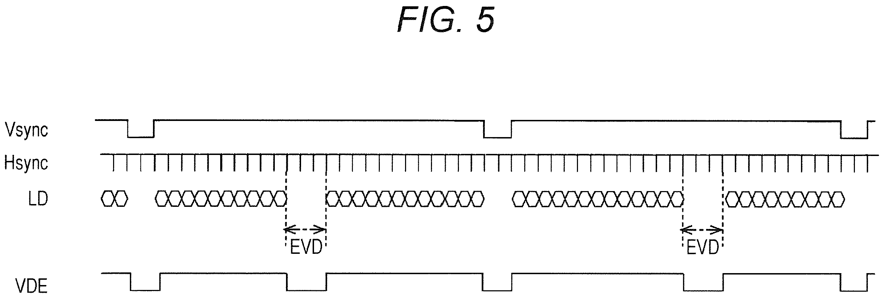

In addition, the horizontal period TH, which is the display stop line period EVD, may be sequentially changed for each image frame as illustrated in Fig. 5.

In addition, the display stop line period EVD is set in units of horizontal periods in the above embodiment, but the display stop line period EVD is not necessarily set in units of horizontal periods, but any period in the vertical effective scanning period TVD can be set as the display stop line period EVD.

In addition, the scan control signal VDE is output from the LCD controller 13 side to control the scanning operation of the touch panel controller 14 in the above embodiment. In regard to this, the touch panel controller 14 may be provided with the above-described function of generating and outputting the scan control signal VDE of the timing generator 134 such that the scan control signal VDE is output from the touch panel controller 14 to the LCD controller 13, the display update operation of the LCD 11 is interrupted when the scan control signal VDE represents the scan execution period in the LCD controller 13, and the scanning operation of the touch panel 12 is executed when the scan control signal VDE represents the scan execution period in the touch panel controller 14. Alternatively, a functional unit that generates and outputs the scan control signal VDE of the timing generator 134 described above may be provided separately from the touch panel controller 14 and the LCD controller 13 such that the scan control signal VDE is output from the functional unit to the LCD controller 13 and the touch panel controller 14, the display update operation of the LCD 11 is interrupted when the scan control signal VDE represents the scan execution period in the LCD controller 13, and the scanning operation of the touch panel 12 is executed when the scan control signal VDE represents the scan execution period in the touch panel controller 14.

### Reference Signs List

- 1: Touch panel-equipped display device
- 2: Host device
- 11: LCD
- 12: Touch panel
- 13: LCD controller
- 14: Touch panel controller
- 15: Interface
- 16: Controller
- 131: Video IF
- 132: Image processor
- 133: Line buffer
- 134: Timing generator

## Claims

1. A touch panel-equipped display device (1) that includes a touch panel (12) and a display device, comprising:
a display controller that is configured to update an image displayed on the display device to an image represented by an input image; and
a touch panel controller (14) that is configured to control a scanning operation which is an operation of scanning whether or not the touch panel (12) is touched or approached by a detection object, wherein
the display controller is configured to cause the display device to sequentially update display of each line of a display image during each of display update horizontal periods in each of frame update cycles that are cycles each having a same time length as a frame cycle of an input image, and including a vertical blanking period in which one cycle has a same time length as a vertical blanking period of the input image, the display update horizontal periods which are provided as many as a number of lines of the input image and each of which has a shorter time length than a horizontal cycle of the input image, and a display update interruption period in which previous and subsequent periods are the display update horizontal periods, and to cause the display device to interrupt the update of the display image during the display update interruption period, and
the touch panel controller (14) is configured to cause the touch panel (12) to perform a scanning operation at least during the vertical blanking period and the display update interruption period in each of the frame update cycles, and to stop the scanning operation of the touch panel (12) during a period in the display update horizontal period when the display device is caused to update the display of the line of the display image.

2. The touch panel-equipped display device (1) according to claim 1, wherein
the display update horizontal period includes a horizontal blanking period and a display update period,
the display controller is configured to cause the display device to sequentially update display of the respective lines of the display image during each of the display update periods in each of the horizontal periods, and
the touch panel controller (14) is configured to cause the touch panel (12) to perform a scanning operation during the vertical blanking period and the display update interruption period and the horizontal blanking period of each of the display update horizontal periods in each of the frame update cycles, and to stop the scanning operation of the touch panel (12) during the display update period in each of the display update horizontal periods.

3. The touch panel-equipped display device (1) according to claim 1 or 2, wherein
the display controller includes:
a FIFO-type buffer that stores pixel data of the input image; and
a display update unit that is configured to read and transfer the pixel data for one line from the buffer to the display device so as to update the display image on the display device by one line during each of the display update horizontal periods, and to interrupt the read from the buffer and the transfer to the display device of the pixel data so as to stop the update of the display image of the display device during the display update interruption period.

4. The touch panel-equipped display device according to claim 1, 2, or 3, wherein
the display update interruption period appears a plurality of times during each of the frame update cycles.

5. The touch panel-equipped display device (1) according to claim 1, 2, or 3, wherein
a timing at which the display update interruption period appears during the frame update cycle changes for each of the frame update cycles.

6. The touch panel-equipped display device (1) according to claim 1, 2, 3, 4, or 5, wherein
a time length of the display update interruption period is an integral multiple of the horizontal cycle of the input image.

7. A control method of a touch panel-equipped display device (1) for controlling the touch panel-equipped display device (1) including a touch panel (12) and a display device, the control method of the touch panel-equipped display device (1) comprising:
a display control step of updating an image displayed on the display device to an image represented by an input image; and
a touch panel control step of controlling a scanning operation which is an operation of scanning whether or not the touch panel (12) is touched or approached by a detection object, wherein
in the display control step, the display device is caused to sequentially update display of each line of a display image during each of display update horizontal periods in each of frame update cycles that are cycles each having a same time length as a frame cycle of an input image, and including a vertical blanking period in which one cycle has a same time length as a vertical blanking period of the input image, display update horizontal periods which are provided as many as a number of lines of the input image and each of which has a shorter time length than a horizontal cycle of the input image, and a display update interruption period in which previous and subsequent periods are the display update horizontal periods, and the display device is caused to interrupt the update of the display image during the display update interruption period, and
in the touch panel control step, the touch panel (12) is caused to perform a scanning operation at least during the vertical blanking period and the display update interruption period in each of the frame update cycles, and the scanning operation of the touch panel (12) is stopped during a period in the display update horizontal period when the display device is caused to update the display of the line of the display image.

8. The control method of the touch panel-equipped display device (1) according to claim 7, wherein
a time length of the display update interruption period is an integral multiple of the horizontal cycle of the input image.
